# FASCICULE DE BREVET EUROPEEN

(11) **EP 2 188 656 B1**
(45) Date de publication et mention de la délivrance du brevet: **22.06.2011**
(21) Numéro de dépôt: 08837275.0
(22) Date de dépôt: 12.09.2008
(51) Int. Cl.: G02B 1/10, C03C 17/34, C03C 17/42, G02C 7/02, G02C 13/00, B24B 9/14

(54) **ARTICLE D'OPTIQUE COMPORTANT UN REVETEMENT TEMPORAIRE BICOUCHE**
OPTISCHER ARTIKEL MIT TEMPORÄRER ZWEISCHICHTIGER BESCHICHTUNG
OPTICAL ARTICLE HAVING A DUAL LAYER TEMPORARY COATING

(30) Priorité: 14.09.2007 FR 0757559
(43) Date de publication de la demande: 26.05.2010
(73) Titulaire: Essilor International (Compagnie Générale D'Optique), 94220 Charenton le Pont (FR)
(72) Inventeur: ACHERITOBEHERE, Hervé, F-94220 Charenton Le Pont (FR); COUE, Peggy, F-94220 Charenton Le Pont (FR); HABASSI, Chefik, F-94220 Charenton Le Pont (FR); MOYSAN, Yannick, F-94220 Charenton Le Pont (FR)
(74) Mandataire: Catherine, Alain
(86) Numéro de dépôt international: PCT/FR2008/051636
(87) Numéro de publication internationale: WO 2009/047422

(56) Documents cités:
- WO-A-03/057641
- WO-A-2005/015270
- WO-A-2005/031441
- WO-A-2007/071700
- US-A1- 2003 228 470

## Description

L'invention se rapporte d'une manière générale au domaine des articles d'optique, en particulier des lentilles, et plus particulièrement des lentilles ophtalmiques, pourvus d'un revêtement externe à propriété hydrophobe et/ou oléophobe (top coat).

Ces revêtements externes hydrophobes et/ou oléophobes sont bien connus dans la technique.

Ces revêtements externes hydrophobes et/ou oléophobes, qui sont généralement associés à des revêtements anti-reflet, ont pour objet de rendre la lentille ophtalmique moins salissante. Il s'agit le plus souvent de matériau de type fluorosilane qui diminue l'énergie de surface afin d'éviter l'adhérence de souillures grasses qu'il est ainsi plus facile d'éliminer.

Un des problèmes engendrés par ces revêtements externes hydrophobes et/ou oléophobes est qu'ils atteignent une efficacité telle que l'adhérence à l'interface d'un patin adhésif/surface du revêtement hydrophobe et/ou oléophobe nécessaire au montage des lentilles lors d'une opération de débordage s'en trouve altérée, voire compromise.

Le débordage est la dernière étape de finition d'une lentille ophtalmique et est l'opération qui consiste à usiner la tranche ou périphérie de la lentille de façon à la conformer aux dimensions et à la forme requise pour adapter la lentille à la monture de lunette dans laquelle elle est destinée à prendre place.

Le débordage est réalisé sur une meuleuse automatisée comprenant des meules diamantées qui effectuent l'usinage défini ci-dessus et il faut donc maintenir fixement la lentille à déborder dans la meuleuse.

Pour ce faire, la première phase consiste à fixer un gland au centre de la surface convexe de la lentille au moyen d'un patin adhésif tel qu'un patin adhésif double face. L'adhésif est de type PSA (Pressure sensitive adhésive), c'est-à-dire un adhésif sensible à la pression.

Le gland auquel adhère la lentille par l'intermédiaire du patin adhésif est alors mécaniquement fixé dans l'axe de montage de la meuleuse et un bras axial vient bloquer la lentille en appliquant une force centrale sur la face de ia lentille opposée au gland.

Lors du débordage, la lentille ne doit pas subir un désaxage supérieur à 2°, de préférence d'au plus 1°, et par conséquent l'adhésion du patin sur la surface de la lentille est essentielle à l'obtention d'un débordage satisfaisant.

Pour remédier à ces difficultés de débordage des lentilles pourvues d'un revêtement externe hydrophobe et/ou oléophobe, on a proposé de former sur ces revêtements hydrophobes et/ou oléophobes un revêtement temporaire, de nature organique ou minéral. Par exemple, les demandes de brevet européen EP 1 392 613 et EP 1 633 684, au nom de ESSILOR, décrivent l'emploi d'un revêtement temporaire, de nature organique ou minérale, qui accroît l'énergie de surface et permet donc à l'opticien de procéder à un débordage fiable de la lentille. Après débordage, le revêtement temporaire doit être enlevé afin de restituer au revêtement externe hydrophobe et/ou oléophobe ses propriétés de surface. Il va de soi, qu'après retrait du revêtement temporaire, le revêtement externe hydrophobe et/ou oléophobe doit présenter des propriétés de surface aussi proche que possible de ses propriétés initiales.

Bien que les revêtements temporaires décrits dans les demandes de brevet européen EP 1 392 613 et EP 1 633 684 conduisent, après leur enlèvement, à des revêtements externes hydrophobes et/ou oléophobes ayant de bonnes propriétés de surface et un angle de contact statique avec l'eau élevé (typiquement 112°), il est souhaitable d'augmenter encore cette valeur d'angle de contact.

Le cas échéant, après l'opération de débordage principale de l'article d'optique, on peut souhaiter effectuer une opération de reprise de débordage, et/ou un perçage du verre, la zone percée servant de point de fixation à une branche de monture de lunettes.

Pour ces dernières étapes, en particulier le perçage du verre, il est fondamental que l'ensemble gland/patin adhésif de maintien reste en position sur la surface de l'article, car il constitue un repère permettant de positionner les forets pour le perçage des trous.

La demande de brevet WO 2005/015270 décrit l'utilisation d'un film protecteur temporaire à base de résine de polyoléfine chlorée.

Le film décrit dans cette demande de brevet permet d'assurer le débordage principal, mais l'on constate systématiquement que l'ensemble gland/patin adhésif de maintien se détache spontanément dans les secondes qui suivent cette opération de débordage principal.

Dès le début de l'opération de débordage, il semble que l'eau projetée sur l'article lors de cette opération de débordage, s'infiltre sous le film temporaire qui s'enroule autour de lui-même. Dans ces conditions, il est alors impossible de procéder ultérieurement à une reprise de débordage ou à un perçage du verre.

La demande de brevet WO 03/057641 décrit une lentille ophtalmique comprenant une surface pourvue d'un revêtement hydrophobe et/ou oléophobe lui-même recouvert d'un revêtement protecteur temporaire. Le revêtement protecteur temporaire a pour but essentiel de protéger le revêtement hydrophobe et/ou oléophobe lors d'un traitement de la surface opposée de la lentille par des espèces énergétiques.

Le revêtements protecteur temporaire peut être inorganique ou organique. Il peut être monocouche ou multicouche.

Toutefois, le seul revêtement multicouche (bicouche) spécifiquement décrit dans la demande est un revêtement comprenant une première couche inorganique, en contact avec le revêtement hydrophobe et/ou oléophobe, et sur la première couche une deuxième couche organique.

Il serait également souhaitable d'avoir un revêtement temporaire à base de polyuréthane, notamment d'une composition de latex de polyuréthane séchée.

Cependant, ces revêtements se dégradent au cours du temps.

En particulier, le revêtement devient collant et poisseux.

Les inventeurs ont trouvé qu'une cause de cette dégradation était la sensibilité du revêtement à l'humidité.

Cette sensibilité à l'humidité peut aussi expliquer la dégradation des propriétés d'adhésion mentionnée précédemment, lors de l'opération de débordage au cours de laquelle de l'eau est projetée sur la lentille ophtalmique.

La présente invention a donc pour objet de fournir un article d'optique, notamment une lentille ophtalmique, comportant un revêtement externe hydrophobe et/ou oléophobe directement revêtu par un revêtement temporaire qui :
- n'est pas ou très peu sensible à l'humidité ;
- après retrait de la couche temporaire, permet de récupérer un revêtement externe hydrophobe et/ou oléophobe ayant des propriétés pratiquement identiques à ses propriétés initiales et en particulier un angle de contact statique avec l'eau pratiquement égal à l'angle de contact statique avec l'eau initial ; et/ou
- permet le cas échéant, une opération de reprise de débordage ; et/ou
- permet d'effectuer un perçage du verre, la zone percée servant de point de fixation à une branche de monture de lunettes.

Les buts ici sont atteints selon l'invention par un article d'optique comportant sur une de ses surfaces principales un revêtement externe hydrophobe et/ou oléophobe de faible énergie de surface, sur lequel est directement déposé un revêtement temporaire, caractérisé en ce que le revêtement temporaire est un revêtement bicouche comportant une première couche, en contact direct avec le revêtement hydrophobe et/ou oléophobe, d'un polymère choisi parmi les polymères de polyoléfines halogénées, notamment chlorées ou fluorées, les polyuréthanes, notamment les compositions de latex de polyuréthane séchées, et une seconde couche, formée sur la première couche, d'un polymère ou d'un mélange de polymères formant barrière à l'eau,

Le polymère formant barrière à l'eau permet au revêtement bicouche de passer l'un ou l'autre ou les deux tests suivants :

### 1) Test de durabilité dans les conditions ambiantes (45-50% d'humidité), température 20°C) :

Les lentilles ophtalmiques sont stockées pendant 48 heures dans des pochettes en papier ou sachets ophtalmiques de la société Landouzy (59000 France) contenant un coussinet intérieur fibreux..

A la fin de la période de 48 heures, les lentilles sont retirées de leur pochette et un examen visuel est effectué, en éclairage à la lumière naturelle.

On repère visuellement (à l'oeil nu) si des fibres ont été arrachées du coussinet et adhèrent à la surface de la lentille et/ou si l'apparence cosmétique du verre a été modifiée (apparition ou non de traces, de taches).

Le test est positif, c'est-à-dire que la lentille passe le test, en cas d'absence de fibres adhérant à la lentille, donc absence de collage, et que le contrôle cosmétique ne relève aucun défaut visuel.

### 2) Test de perçage et débordage :

Il s'agit du protocole détaillé de mesure de désaxage tel que décrit plus loin, utilisant une machine Essilor Kappa, suivi d'une étape de perçage.

Pour passer l'ensemble de ces deux tests, le patin adhésif doit adhérer suffisamment au verre pendant et après l'étape de débordage pour pouvoir être soumis à l'étape de perçage et par conséquent la bicouche située sous le patin adhésif doit avoir résisté aux projections d'eau lors de l'étape de débordage.

Le polymère constituant la première couche et le polymère de la deuxième couche sont différents l'un de l'autre.

Les polymères préférés pour la première couche sont les polyuréthanes, notamment les compositions de latex de polyuréthane séchées.

Dans la présente demande le terme "polymère" englobe les homopolymères et les copolymères.

Dans la présente demande, le terme "article d'optique" désigne un substrat en verre organique ou minéral, optiquement transparent, traité ou non, selon qu'il comporte un ou plusieurs revêtements de nature diverse ou qu'il reste nu.

Les énergies de surface sont calculés selon la méthode OWENS-WENDT décrite dans la référence suivante : "Estimation of a surface force energy of polymers" OWENS D.K., WENDT R.G. (1969) J. Appl. POLYM. SCI, 13, 1741-1747.

Les articles d'optique de l'invention sont des articles d'optique, notamment des lentilles ophtalmiques, qui comportent un revêtement externe hydrophobe et/ou oléophobe et préférentiellement des articles d'optique comportant à la fois un revêtement externe hydrophobe et/ou oléophobe déposé sur un revêtement anti-reflet mono ou multi-couche.

En effet, les revêtements externes hydrophobes et/ou oléophobes sont généralement appliqués sur des articles d'optique comportant un revêtement anti-reflet, en particulier en matière minérale, afin de réduire leur tendance marquée à la salissure, par exemple vis-à-vis des dépôts graisseux.

Comme cela est connu, les revêtements externes hydrophobes et/ou oléophobes sont obtenus par application, sur la surface du revêtement anti-reflet de composés diminuant l'énergie de surface de l'article d'optique.

De tels composés ont été largement décrits dans l'art antérieur, par exemple dans les brevets US-4,410,563, EP 0 203 730, EP 749 021, EP 844 265, et EP 933 377.

Les composés à base de silane porteur de groupements fluorés, en particulier de groupements perfluorocarbone ou perfluoropolyéther, sont le plus souvent utilisés.

A titre d'exemple, on peut citer des composés de silazane, de polysilazane ou de silicone comprenant un ou plusieurs groupements fluorés tels que cités précédemment.

Un procédé connu consiste à déposer sur le revêtement anti-reflet des composés porteurs de groupements fluorés et des groupements Si-R, R représentant un groupe -OH ou un précurseur de celui-ci, préférentiellement un groupe alcoxy. De tels composés peuvent effectuer à la surface du revêtement anti-reflet, directement ou après hydrolyse, des réactions de polymérisation et/ou réticulation.

L'application des composés diminuant l'énergie de surface de l'article d'optique est classiquement effectuée par trempé dans une solution du composé, par centrifugation ou dépôt en phase vapeur, notamment.

Généralement, le revêtement externe hydrophobe et/ou oléophobe a une épaisseur inférieure à 10 nm, et mieux encore inférieure à 5 nm.

En général, le revêtement externe hydrophobe et/ou oléophobe de faible énergie de surface, a une énergie de surface égale ou inférieure à 14 mJ/m², de préférence égale ou inférieure à 13 mJ/m², mieux égale ou inférieure à 12 mJ/m².

Les revêtements de surface hydrophobes et/ou oléophobes préférés comprennent au moins un composé fluoré, mieux au moins un composé de nature silane, silazane ou polysilazanes porteur d'un ou plusieurs groupes fluorés, en particulier des groupes hydrocarcarbonés fluorés, perfluorocarbonés, polyéther fluorés, tel que le groupe F₃C-(OC₃F₆)₂₄-O-(CF₂)₂-(CH₂)₂-O-CH₂-Si(OCH₃)₃ ou perfluoropolyéther.

Une méthode classique pour former un revêtement hydrophobe et/ou oléophobe consiste à déposer des composés porteurs de groupes fluorés et de groupes Si-R, R représentant un groupe hydroxyle ou un groupe précurseur tel qu'un groupe hydrolysable, par exemple Cl, NH₂, NH- ou -O-alkyl, de préférence un groupe alcoxy. Ils sont de préférence fabriqués à partir de fluorosilanes ou fluorosilazanes précurseurs, comprenant de préférence au moins deux groupes hydrolysables par molécule. De tels composés sont capables de subir, lorsqu'ils sont déposés sur une surface, des réactions de polymérisation et/ou de réticulation, directement ou après hydrolyse.

Des fluorosilanes particulièrement adaptés pour former des revêtements hydrophobes et/ou oléophobes sont ceux contenant des groupements fluoropolyéthers décrits dans le brevet US 6,277,485.

Ces fluorosilanes répondent à la formule générale : 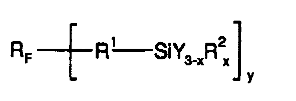 dans laquelle R_{F} est un groupe polyfluoropolyéther monovalent ou divalent, R¹ est un groupe divalent alkylène, arylène ou une combinaison de ceux-ci, contenant éventuellement un ou plusieurs hétéroatomes ou groupes fonctionnels et éventuellement substitués par des halogènes, et contenant de préférence 2 à 16 atomes de carbone ; R² est un groupe alkyle inférieur (c'est-à-dire un groupe alkyle en C₁-C₄) ; Y est un atome d'halogène, un groupe alcoxy inférieur (c'est-à-dire une groupe alcoxy en C₁-C₄, de préférence méthoxy ou éthoxy), ou un groupe acyloxy inférieur (c'est-à-dire -OC(O)R³ où R³ est un groupe alkyle en C₁-C₄) ; x est 0 ou 1 ; et y est 1 (R_{F} est monovalent) ou 2 (R_{F} est divalent). Les composés appropriés ont en général une masse molaire moyenne en nombre d'au moins 1000. De préférence, Y est un groupe alcoxy inférieur et R_{F} est un groupe perfluoropolyéther.

D'autres fluorosilanes recommandés sont ceux de formule : 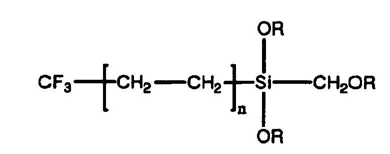 où n = 5, 7, 9 ou 11 et R est un groupe alkyle, de préférence en C₁-C₁₀ tel que -CH₃, -C₂H₅ et -C₃H₇ ;
CF₃(CF₂)₅CH₂CH₂Si(OC₂H₅)₃ ((tridécafluoro-1,1,2,2-tétrahydro)octyl-triéthoxysilane) ;

CF₃CH₂CH_{Z}SiCl₃ ;

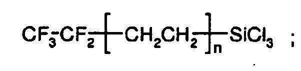

et 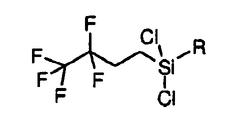 où n = 7 ou 9 et R est tel que défini ci-dessus.

Des compositions contenant des fluorosilanes également recommandées pour la préparation de revêtements hydrophobes et/ou oléophobes sont décrites dans brevet US 6,183,872. Elles contiennent des fluoropolymères à groupements organiques porteurs de groupes à base de silicium représentés par la formule générale suivante et ayant une masse moléculaire de 5.10² à 1.10⁵ : 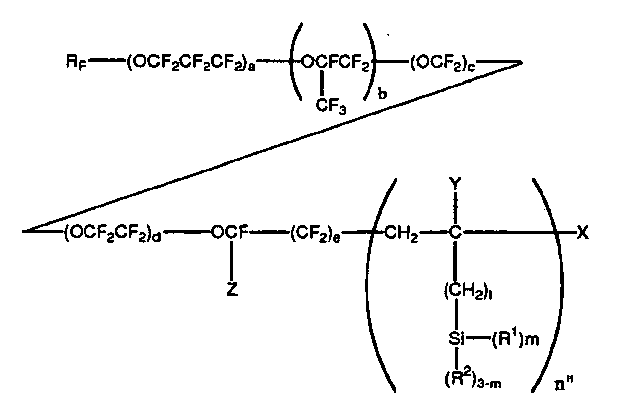 dans laquelle R_{F} représente un groupement perfluoroalkyle ; Z représente un groupe fluoro ou trifluorométhyle ; a, b, c, d et e représentent chacun, indépendamment l'un de l'autre, 0 ou un entier supérieur ou égal à 1, à la condition que la somme a+b+c+d+e ne soit pas inférieure à 1 et que l'ordre des unités répétitives figurant entre les parenthèses indexées sous a, b, c, d et e ne soit pas limité à celui représenté ; Y représente H ou un groupe alkyle comprenant de 1 à 4 atomes de carbone ; X représente un atome d'hydrogène, de brome ou d'iode ; R¹ représente un groupe hydroxyle ou un groupe hydrolysable ; R² représente un atome d'hydrogène ou un groupement hydrocarboné monovalent ; 1 représente 0, 1 ou 2 ; m représente 1, 2 ou 3 ; et n" représente un entier au moins égal à 1, préférentiellement au moins égal à 2.

D'autres fluorosilanes convenant pour la formation de revêtements anti-salissures sont décrits dans les brevets JP 2005-187936 et EP 1 300 433, et répondent à la formule : 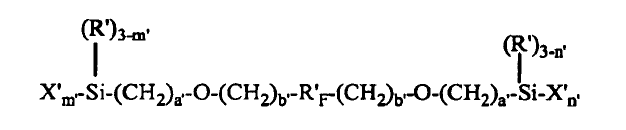 dans laquelle R'_{F} est un radical divalent perfluoropolyéther à chaîne linéaire, R' est un radical alkyle en C₁-C₄ ou un radical phényle, X' est un groupe hydrolysable, a' est un entier de 0 à 2, b' est un entier de 1 à 5, et m' et n' sont des entiers égaux à 2 ou 3.

Des compositions commerciales permettant de préparer des revêtements hydrophobes et/ou oléophobes sont les compositions KY130^{®} (répondant à la formule du brevet JP 2005-187936) et KP 801M^{®} commercialisées par Shin-Etsu Chemical, et la composition OPTOOL DSX^{®} (une résine fluorée comprenant des groupes perfluoropropylène répondant à la formule du brevet US 6,183,872) commercialisée par Daikin Industries. La composition OPTOOL DSX^{®} est la composition de revêtement anti-salissures préférée.

Comme indiqué précédemment, le revêtement temporaire de l'invention est un revêtement bicouche déposé directement sur le revêtement externe hydrophobe et/ou oléophobe.

Le revêtement temporaire bicouche comprend une première couche, en contact direct avec le revêtement hydrophobe et/ou oléophobe, d'un polymère choisi parmi les polymères d'oléfines halogénés et les polyuréthanes.

Avant de procéder au dépôt de la première couche il est recommandé d'effectuer une préparation d'une partie de la surface hydrophobe et/ou oléophobe sur laquelle cette première couche doit être déposée, de façon à promouvoir une adhérence physique avec le revêtement protecteur.

Cette préparation consiste à soumettre au moins une partie de la région périphérique de la surface principale revêtue à un traitement résultant en une élimination du revêtement hydrophobe et/ou oléophobe et/ou une modification de ce revêtement abaissant son caractère hydrophobe, dans au moins une partie de cette région périphérique.

Par zone ou région périphérique de la surface de la lentille, on entend dans la présente demande la région la plus éloignée du centre de la lentille, qui a généralement la forme d'une région annulaire.

Un traitement abrasif peut être réalisé au moyen d'un tissu abrasif ou d'une feuille ou toile abrasive, ou tout autre moyen de même nature. Toute poudre abrasive collée sur un support plan (papier, toile, papier toilé, plastique) ou cylindrique, adaptable à des tours, peut convenir pour l'invention. Des exemples de poudres abrasives utilisables, naturelles ou artificielles sont les poudres alumineuses telles que la corindon et l'émeri; les matières siliceuses telles que le verre, le sable, le talc, certains grès chargés de quartz, le quartz lui-même; la pierre ponce, le grenat, le silex, les carbures métalliques, le carbure de silicium. Il est également possible d'employer une feuille, un rouleau, ruban ou tampon abrasif synthétique du type tampons Scotch-Brite^{®}, commercialisés par 3M. On utilise de préférence une toile émeri, un papier de verre, un papier corindon, une laine d'acier ou un tampon abrasif synthétique.

Outre ces traitements mécaniques, il est possible d'employer, si la nature du revêtement anti-salissures s'y prête, ce qui peut être déterminé facilement par l'homme du métier, des traitements chimiques ou physico-chimiques permettant d'aboutir à une élimination et/ou une modification du revêtement anti-salissures abaissant son caractère hydrophobe.Ces traitements peuvent être combinés à une action mécanique, et peuvent dans certains cas être destinés à préparer l'action mécanique.

De préférence, le traitement est effectué sur au moins une partie d'une zone s'étendant du bord de la lentille jusqu'à une distance du bord de la lentille représentant moins de 2 % du rayon de la lentille, mieux moins de 1,5 %, encore mieux moins de 1 %, et idéalement moins de 0,5 %, et de préférence sur la totalité de ladite zone.

Le pourcentage de la surface d'une face de la lentille soumise au traitement est généralement inférieur à 5 %, de préférence inférieur à 3 %, mieux inférieur à 2 % et encore mieux inférieur à 1 %. Par exemple, dans le cas d'une lentille de 65 mm de diamètre, le traitement sera généralement effectué sur une couronne périphérique de 0,1 à 0,2 mm de largeur, ce qui représente moins de 2 %

Les polymères d'oléfine halogénée préférés sont les résines de polyoléfine chlorée et les polyoléfines fluorées.

Parmi les résines de polyoléfine chlorée on peut citer les résines de polyéthylène chloré et de polypropylène chloré.

Parmi les polymères d'oléfine fluorée on peut citer les homo et copolymères de chlorotrifluoroéthylène, hexafluoropropène, hexafluoroacétone, 1-hydropentafluoropropène, perfluorovinyléther, perfluorométhylvinyléther, trifluoroéthylène, tétrafluoroéthylène et fluorure de vinylidène.

De préférence, la première couche du revêtement temporaire bicouche est une couche à base de polyuréthane et de préférence encore à base d'une composition de latex de polyuréthane séchée.

Par couche à base de polyuréthane on entend une couche comprenant au moins 80% en poids de polyuréthane par rapport au poids total de la couche.

De préférence la couche à base de polyuréthane est une couche de composition de latex de polyuréthane séchée.

Comme cela est bien connu, un latex est une dispersion dans un milieu aqueux de particules de polymère ou de copolymère. Le milieu aqueux peut être de l'eau, par exemple de l'eau distillée ou de l'eau désionisée, ou encore un mélange d'eau et d'un ou plusieurs solvant, notamment d'eau et d'alcanol, généralement un alcanol en C1 à C6, et de préférence l'éthanol.

Dans la présente invention, le terme "polyuréthane" englobe à la fois les (co)polymères de polyuréthane proprement dits, c'est-à-dire les polymères obtenus par condensation d'au moins un polyisocyanate et d'au moins un polyol et éventuellement d'un prolongateur de chaîne, et les polyuréthane-urée, c'est-à-dire les (co)polymères obtenus par condensation d'au moins un polyisocyanate et d'une polyamine, et éventuellement d'un prolongateur de chaîne, et des mélanges de ceux-ci.

De préférence, les polyuréthanes et polyuréthane-urée de l'invention résultent de la condensation d'un diisocyanate avec un diol et/ou une diamine. De préférence encore, les polyuréthanes et polyuréthane-urée de l'invention sont des polyuréthanes et polyuréthane-urée aliphatiques linéaires ou cycliques, c'est-à-dire obtenus par condensation de polyisocyanates aliphatiques linéaires ou cycliques avec des polyols et/ou des polyamines aliphatiques linéaires ou cycliques.

Parmi les polyisocyanates utiles pour la formation des polyuréthanes et polyuréthane-urée de l'invention, et notamment les diisocyanates préférés, on peut citer le toluène-2,4-diisiocyanate, le toluène -2,6-diisocyanate, le diphénylméthane-4,4'-diisocyanate, le diphénylméthane-2,4'-diisocyanate, le paraphénylène diisocyanate, le biphényl diisocyanate, le 3,3'-diméthyl-4,4'-diphényène diisocyanate, le tétraméthylène-1,4-diisocyanate, l'hexaméthylène-1,6-diisocyanate, le 2,2,4-triméthylhexane-1,6-diisocyanate, le lysineméthylester diisocyanate, le bis(isocyanoéthyl) fumarate, l'isophorone diisocyanate, (IPDI), l'éthylène diisocyanate, le dodécane-1,12-diisocyanate, le cyclobutane-1,3-diisocyanate, le cyclohexane-1,3-diisocyanate, le cyclohexane-1,4-diisocyanate, le méthylcyclohexyl diisocyanate, l'hexahydrotoluène-2,4-diisocyanate, le méthylcyclohexyl diisocyanate, l'hexahydrotoluène-2,4-diisocyanate, l'hexahydrotoluène-2,6-diisocyanate, l'hexahydrophénylène-1,3-diisocyanate, l'hexahydrophénylène-1,4-diisocyanate, le perhydrodyphénylméthane-2,4'-diisocyanate, le perhydrodiphénylméthane-2,4'-diisocyanate, le perhydrodiphénylméthane-2,4'-diisyocanate, le perhydrophénylméthane-4,4'-diisocyanate (ou bis-(4-isocyanatocyclohexil)-méthane, ou 4,4'-dicyclohexilméthane diisocyanate) et leurs mélanges.

Les polyisocyanates préférés sont les diisocyanates aliphatiques tels que l'hexaméthylène-1,6-diisocyanate, l'isophorone diisocyanate, l'éthylène diisocyanate, le dodécane-1,12-diisocyanate, le cyclohexane-1,3-diisocyanate, le bis-(4-isocyanato-cyclohexyl)-méthane et leurs mélanges. Le diisocyanate préféré est l'isophorone diisocyanate.

D'autres polyisocyanates convenant pour les polyuréthanes et polyuréthane-urée de l'invention sont décrits en détail dans le document WO 98/37 115.

Parmi les polyols convenant pour les polyuréthanes de l'invention on peut citer le pentaérythritol, le triméthylol éthane, le triméthylol propane, l'acide di(triéthylol propane) diméthylol propionique, l'éthylène glycol, le 1,2 et le 1,3-propylène glycol, le 1,2-butanediol, le 1,4-buténediol, le 1,3-butanediol, le 2,3-butanediol, le 2,2,4-triméthyl-1,3-pentanediol, le 1,5-pentanediol, le 2,4-pentanediol, le 1,6-hexanediol, le 2,5-hexanediol, le 1,8-optanediol, le 2-méthyl-l,3pentadiol, le 2,4-heptanediol, le 2-éthyl-1,3-hexanediol, le 2-méthyl-1,3-propanediol, le 2,2-diméthyl-1,3-propanediol (néopentylglycol), le 1,4-cyclohexanediol, le 2,2-diméthyl-3-hydroxypropyl-2,2-diméthyl-3-hydroxypropionate, le 1,2,6-hexanetriol, le 1,2,4-butanetriol, le glycerol, le sorbitol, le manitol, le diéthylèneglycol, le triéthylèneglycol, le tétraéthylèneglycol, le dipropylèneglycol, le tripropylèneglycol, le dibutylèneglycol, le 1,4-bis(hydroxyméthyl)cyclohexane, le 1,2-bis(hydroxyméthyl)cyclohexane, le 1,2-bis(hydroxyéthyl)cyclohexane, les bis(hydroxypropyl)lantoïnes, le trishydroxyéthylisocyanurate.

Les polyols préférés sont les diols aliphatiques et notamment le polypropylène glycol.

Une autre classe de polyols convenant pour les polyuréthanes et polyuréthane-urée de l'invention sont les polyéthers polyols tels que les polyoxyalkylènes polyols, les polyols polyalcoxylés tels que les poly(oxytétraméthylène)diols et leurs mélanges.

Les polyamines préférées sont les diamines, en particulier les diamines aliphatiques linéaires et cycliques.

Parmi les diamines on peut citer le diaminométhane, l'éthylène diamine, le 1,2-diaminopropane, le 1,3-diaminopropane, le 1,4-diaminobutane, le 1,6-diaminchexane, le 1,4-diaminocyclohexane, le 4,4'-diaminodicyclohexylméthane, le 1-amino-3-aminométhyl-3,5,5trimétrylcyclohexane, la triméthylamine.

On peut également utiliser pour la préparation des polyuréthanes et polyuréthane-urée convenant pour l'invention des amino-alcools tels que la monoéthanolamine, la diéthanolamine.

Les polyuréthanes et leur mode de préparation sont décrits entre autres, dans le brevet US-6,187,444.

De préférence, les polyuréthanes de l'invention ne comportent pas de fonctions acryliques ou méthacryliques, et en particulier pas de fonction acrylique ou méthacrylique polymérisable.

Les latex de polyuréthane convenant pour la présente invention sont disponibles dans le commerce, par exemple auprès de la société BAXENDEN sous les dénominations W 234 et W 240 (polyuréthane-urée) ou sous la dénomination Pellimer TC^{®} (polyuréthane-urée) auprès de la société SOCOMOR et PROXR 910^{®} (polyuréthane) auprès de la société SYNTRON.

Le Pellimer TC^{®} sera utilisé par la suite après une dilution à l'eau. (On effectue un mélange constitué de 80% en poids de Pellimer TC^{®} pour 20 % en poids d'eau). Ce mélange obtenu sera dénommé par la suite TC80F.

Les compositions de latex de polyuréthane selon l'invention peuvent bien évidemment être des mélanges de latex de polyuréthane, en particulier des latex de polyuréthane du commerce.

Dans une réalisation particulière de l'invention, la composition de latex de polyuréthane comprend également une faible proportion, jusqu'à 10% en poids de la composition, d'un latex (méth)acrylique, de préférence d'un latex acrylique. De préférence, la proportion en poids de latex (méth)acrylique varie de 0,1 à 10% en poids et mieux de 2 à 6% en poids par rapport au poids total de la composition de latex.

La proportion en poids d'extrait sec du latex acrylique par rapport au poids total d'extrait sec de la composition varie également de préférence de 0,1 à 10% en poids, et mieux de 2 à 6% en poids.

La présence de latex (méth)acrylique a pour avantage, d'une part de diminuer le caractère hydrophile du matériau et d'autre part de rendre la couche finale sèche plus rigide et de réduire son allongement à la rupture.

Ces latex (méth)acryliques sont disponibles dans le commerce notamment auprès de la société SYNTRON sous les dénominations PROXAM 185 RS^{®} (résine acrylique), PROXAM 157^{®} (copolymère acrylique), PROXAM N 360^{®} (copolymère acrylique).

De préférence, les compositions de latex PU selon l'invention sont exemptes de particules colloïdales minérales ou de magnésium.

En général, les compositions de latex PU selon l'invention comprennent encore de préférence un ou plusieurs agents tensio-actifs généralement à raison de 0,5 à 10% en poids par rapport au poids total de la composition de latex, préférentiellement 0,5 à 6% en poids.

En général, les compositions de latex PU selon l'invention ont une teneur en solide (extrait sec) de 25 à 55% en poids, de préférence de 25 à 50%, mieux de 25 à 45% en poids par rapport au poids total de la composition de latex.

Leur viscosité à température ambiante varie de préférence de 5 à 50 cp, et mieux de 7 à 46 cp.

La seconde couche du revêtement temporaire bicouche est formée par tout polymère différent de la première couche et peut être choisi parmi les polymères vinyliques, les polyépoxydes, les polyépisulfures, les polyesters, les polyéthers, les polyester-éthers, les polythio(méth)acrylates poly(méth)acrylates, les polymères de styrène, les polymères de cellulose et leurs mélanges.

La seconde couche présente une énergie de surface suffisante pour permettre l'adhésion du patin de maintien à sa surface. Le rôle de l'énergie de surface a été divulgué dans la demande de brevet EP1392613.

Outre son effet barrière à l'eau, la seconde couche a aussi pour fonction, le cas échéant, d'empêcher les surfactants, en particulier des surfactants de type copolymères acryliques qui auraient pu migrer au cours du temps vers la surface de la première couche, d'être au contact de l'air.

Parmi les polymères vinyliques on peut citer le poly(acétate de vinyle), le poly(vinylphénol), la poly(vinylpyrrolidone et le poly(vinylpyrrolidone-es-acétate de vinyle). Le polymère vinylique préféré est le poly(acétate de vinyle).

Parmi les polymères de cellulose on peut citer les polymères d'alkylcellulose, par exemple l'éthylcellulose, et les polymères d'hydroxyalkylcellulose, par exemple l'hydroxypropylcellulose.

Préférentiellement, le polymère de cellulose est utilisé dans une proportion de 3 à 15% en poids, mieux de 3 à 10% en poids, en milieu solvant organique.

Le solvant organique utilisé pour le polymère de cellulose est de préférence un solvant alcoolique, cétonique ou un mélange de ces deux solvants.

Parmi les polymères (méth)acryliques on peut citer les polyacrylates, les polyméthacrylates, par exemple le polyméthacrylate de méthyle.

En particulier, la seconde couche du revêtement temporaire bicouche peut être formée d'une composition séchée d'un latex poly(méth)acrylique.

Les latex poly(méth)acryliques sont des latex de copolymères constitués principalement par un (méth)acrylate, tel que par exemple le (méth)acrylate d'éthyle, de butyle, de méthoxyéthyle ou d'éthoxyéthyle, avec, le cas échéant, une proportion généralement mineure d'au moins un autre co-monomère, tel que par exemple du styrène.

Les latex poly(méth)acryliques préférés sont les latex de copolymères acrylate-styrène. De tels latex de copolymères acrylate-styrène sont disponibles commercialement auprès de la société ZENECA RESINS sous la dénomination NEOCRYL®.

Les polymères particulièrement préférés pour la seconde couche sont les poly(méth)acrylates et les polymères de cellulose, notamment les polyacrylates et les polyalkyl et polyhydroxyalkylcelluloses. Les polymères de cellulose donnent les meilleurs résultats dans le cadre de l'invention.

Les couches du revêtement temporaire bicouche de l'invention peuvent être déposées par tout type de moyen, mais préférentiellement par trempage (dip coating), centrifugation, pulvérisation, ou appliquée au moyen d'un pinceau (brush coating), de préférence par trempage.

Le dépôt peut être effectué sur la totalité de la surface de la face de la lentille destinée à recevoir le patin adhésif de maintien ou sur une partie de celle-ci, en particulier dans la partie centrale de la lentille.

Dans un mode de réalisation, on peut appliquer les couches du revêtement temporaire sur la partie centrale au moyen d'un pinceau.

De préférence, la couche temporaire est optiquement inactive, c'est-à-dire qu'elle permet la mesure de puissance avec des moyens de mesure classiques tel que le frontofocomètre.

La première couche du revêtement temporaire bicouche de l'invention a en général une épaisseur de 10 à 40 µm, de préférence 15 à 30 µm et mieux 15 à 20 µm.

La seconde couche du revêtement temporaire bicouche a en général une épaisseur de 15à25µm..

De préférence le revêtement temporaire bicouche de l'invention est un revêtement pelable. Le revêtement peut être enlevé manuellement en tirant sur celui-ci.

Les deux couches se retirent en même temps.

Les exemples suivants illustrent la présente invention. Dans les exemples, sauf indication contraire, toute les parties et tous les pourcentages sont exprimés en poids.

### 1. Composition de latex PU utilisée pour former la première couche du revêtement temporaire bicouche

| | Poids (g) |
|---|---|
| Latex Pu PROX R 910^{®} | 910,48 |
| Latex acrylique PROX AM 185 RS^{®} | 35,24 |
| Copolymère acrylique ACTIRON F 484^{®} (tensioactif) | 6,67 |
| Copolymère acrylique MODAREZ PW 336^{®} (tensioactif) | 47,62 |

Dans un bécher on ajoute successivement le latex PU, le latex acrylique puis les tensioactifs et on agite le mélange au RAYNERIE (turbine défloculeuse de diamètre 35mm) en commençant à faible vitesse puis en argumentant la vitesse progressivement jusqu'à 1800 tr/minute et on poursuit l'agitation pendant environ 2 heures et demie.

On laisse reposer une nuit (élimination de microbulles) avant utilisation.

### 2. Exemple

On a formé sur des lentilles en polycarbonate (PC) (puissance : -8,00 cylindre : + 2,00 diamètre 65mm et épaisseur au centre 1,1 mm) préalablement revêtues, dans l'ordre indiqué, d'un revêtement anti-abrasion, d'un revêtement anti-reflet et d'un revêtement externe hydrophobe et/ou oléophobe (OPTOOL DSX, épaisseur programmée 14nm correspondant à environ 2-5 nm d'épaisseur réelle) comme décrit à l'exemple 1 du brevet EP 1 392 613.

Avant dépôt de la couche de latex, les lentilles subissent un traitement abrasif de surface, à la périphérie annulaire de la lentille au moyen d'un papier abrasif toile émeri (type Norton R222) avec un grain fin de 180.

La première couche formée de la composition de latex séchée décrite ci-dessus a été ensuite obtenue par dépôt au trempé en utilisant une machine de revêtement au trempé avec une vitesse de démouillage de 1 mm/s et un temps de pause de 10 secondes. Les échantillons revêtus de cette première couche du revêtement temporaire sont ensuite séchés dans une étuve à 50°C pendant 2 heures. La première couche PU à une épaisseur de 15 à 20 µm.

La seconde couche du revêtement temporaire, définie dans le tableau 1 ci-dessous a été formée par dépôt au trempé comme précédemment, sauf la composition acrylique qui a été déposée par centrifugation (spin coating). La nature des compositions de polymère pour la seconde couche et les températures et temps de séchage sont donnés dans le tableau 1 ci-dessous.

**TABLEAU I**

| Verre N° | Polymère | Température de séchage °C | Temps |
|---|---|---|---|
| **1** | PVAC | 50°C | 2h |
| **2** | Ethylcellulose | 20°C | 2h |
| **3** | Acrylique | à Température ambiante sous irradiation UV | 75 secondes d'irradiation UV lampe H+ |

PVAC : Polyacétate de vinyle 19,9% Méthyléthylcétone 80,1%
Ethylcellulose : Ethylcellulose d'Aldrich 4,8% Acétone 57,1%
Ethylacetoacétone 38,1%
Acrylique : formulation polymérisable à base de constituants provenant de Sartomer constituée de :
   SR506d(Isobornyl acrylate) 120,02 g
   SR508(dipropylène glycol diacrylate) 30, 07g
   SR610(polyéthylèneglycol 600 diacrylate) 30,04g
   SR399(dipentaérythritol pentaacrylate) 59,99g
   CN965 (oligomère aliphatique uréthane acrylate) 180,07g
   Darocur 1173 (Ciba) 0,28g

Le dépôt de la couche acrylique est effectué par centrifugation :

Lors du dépôt (dispense): la lentille tourne à 500 tours/minute (durée 15 secondes), puis la vitesse est montée à 2350 tours/minute pendant 10 secondes.

Le vernis acrylate est polymérisé dans un four UV fusion équipé d'une lampe H+ pendant 5x15 secondes

On a effectué des essais de débordage et de perçage des échantillons. On a également évalué le comportement au stockage en pochette. Les résultats sont donnés dans le tableau II ci-dessous.

**TABLEAU II**

| Verre N° | Etalement | Cosmétique | Débordage | Perçage | Pelage | Stockage |
|---|---|---|---|---|---|---|
| 1 | OK | OK | OK | OK | OK | OK |
| 2 | OK | OK | OK | OK | OK | OK |
| 3 | OK | OK | OK | No | OK | OK |

**Comparatif** : une lentille revêtue uniquement d'une monocouche de latex PU (sans dépôt de la seconde couche) ne passe pas le test de stockage à l'humidité pendant 3 mois..

**Etalement** : les lentilles ophtalmiques sont inspectées visuellement (à l'oeil nu) après retrait juste après dépôt au trempé de la première couche (couche de latex PU) afin de vérifier que la couche forme bien un film continu sur l'ensemble de la surface convexe (face avant) de la lentille. Si c'est le cas la lentille est noté OK, sinon la lentille est notée No.

**Cosmétique** : les lentilles, après le dépôt de la bicouche sont inspectées visuellement (à l'oeil nu) en transmission et en réflexion en lumière naturelle afin d'y déceler la présence de défauts optiques (coulures, taches).En l'absence de défauts optiques, la lentille est notée OK.

**Pelage** : la lentille est notée OK si la bicouche peut être retirée manuellement en une seule partie, sans se déliter.

### PROTOCOLE DE MESURE DE DESAXAGE DE LENTILLES SOUMISES A UNE OPERATION DE DEBORDAGE (ou DETOURAGE).

### I- Description du test

Le test de débordage est effectué sur une meuleuse Essilor Kappa.

Les lentilles revêtues de la bicouche sont débordés de façon à leur donner la forme d'un gabarit de monture spécifique (voir ci-dessous).

Les équipements suivants sont nécessaires pour réaliser le test :
Frontofocomètre Essilor CLE 60 (pour pointage des verres et contrôle final)
Chaîne numérique Essilor Kappa (Centreur/Bloqueur et Meuleuse).
Gabarit de monture de type Charmant référence 8320, modèle 05, taille 51 Pseudo monture de contrôle.

Pastillé adhésive ou patin adhésif de maintien LEAP ii de diamètre 24 mm GAM200 de la société 3M.

Gland Essilor pour accueillir la pastille adhésive.

### II- L'échantillonnage et les paramètres de montage

Les cotes de montage retenues sont les suivantes :
Hauteur : Demi-hauteur boxing soit
PD (droite et gauche) = 32 mm et Axe = 90°

Le cycle de détourage utilisé est un cycle adapté au matériau (cycle plastique pour bas indice, cycle polycarbonate pour PC et cycle pour substrat Moyen indice de réfraction MHI). La pression de serrage retenue est la pression correspondant à l'option verre fragile de la meuleuse.

### III- Contrôles

Après débordage, on effectue un contrôle afin de déterminer si l'opération de débordage a été effectuée de façon satisfaisante.

Les contrôles sont effectués à l'aide du frontofocomètre CLE 60 en pointant les lentilles placées dans la pseudo-monture. Les axes sont repérés durant cette phase.

Si la lentille, après l'opération de débordage ne peut être insérée dans la pseudo-monture ou si la lentille peut être insérée dans la pseudo-monture, mais qu'elle présente un désaxage de plus de 2°, la lentille est non-conforme et n'a pas passé le test. Elle est référencée No dans le tableau de résultats.

Si le verre présente un désaxage de moins de 2°, la lentille passe le test et elle est référencée OK dans le tableau de résultats.

### PERCAGE APRES DEBORDAGE

Après l'opération de débordage, l'ensemble lentille et gland/patin adhésif, avec le gland/patin adhésif adhérant fermement à la lentille est placé dans une machine de perçage Optodrill ou Minima2 et maintenu par un bloqueur.

La lentille est alors percée
- soit manuellement avec la perceuse Minima 2 munie d'un foret de 2.2 mm de diamètre, de vitesse de rotation 3500 tours/minute.
- soit automatiquement avec la perceuse Optidrill Evo munie d'un foret de 2,2 mm de diamètre de vitesse de rotation 12000 tours/minute.

Après perçage, on dévisse le système de fixation et on récupère la lentille percée et le gland/patin adhésif.

Puis le gland est ôté et la lentille percée récupérée.

Lorsque la lentille peut être positionnée dans le dispositif de perçage et passe de ce fait avec succès l'opération de perçage, elle est notée OK dans le tableau II. Dans le cas contraire, elle est notée NO..

### COMPORTEMENT AU STOCKAGE

Deux tests sont réalisés successivement :

### 1) Test de stockage dans les conditions ambiantes (4%50A d'humidité), température 20 °C) :

Les lentilles ophtalmiques sont stockées pendant 48 heures dans des pochettes en papier (ou sachets ophtalmiques) Landouzy (59000 France) comportant un coussinet fibreux.

A la fin de la période de 48 heures, les lentilles sont retirées de leur pochette et un examen visuel est effectué.

On repère visuellement (à l'oeil nu) si des fibres ont été arrachées de la pochette et adhèrent à la surface de la lentille, si l'apparence cosmétique du verre a été modifiée (apparition ou non de traces, de taches).

Si ce premier test est positif, c'est-à-dire absence de fibres, donc de collage, et que le contrôle cosmétique ne relève aucun défaut visuel, la lentille est alors soumise au test n°2.

### 2) Test de stockage dans des conditions de forte humidité :

Les lentilles ophtalmiques disposées dans la même pochette que celle-ci-dessus sont stockées pendant 3 mois dans une enceinte climatique régulée en température (40°C° et en hygrométrie (80% d'humidité)).

A la fin de la période de trois mois, on effectue les mêmes tests visuels que précédemment.

Si la lentille ophtalmique passe avec succès les deux tests, on note OK dans le tableau II ci-dessus.

Sinon, on note NO.

## Revendications

1. Article d'optique comportant sur au moins une de ses surfaces principales un revêtement externe hydrophobe et/ou oléophobe et en contact direct avec le revêtement externe hydrophobe et/ou oléophobe un revêtement temporaire bicouche, **caractérisé en ce que** le revêtement temporaire bicouche comprend une première couche, en contact direct avec le revêtement externe hydrophobe et/ou oléophobe, d'un polymère choisi parmi les polymères d'oléfines halogénées et les polyuréthanes et une deuxième couche d'un polymère ou mélange de polymères formant barrière à l'eau déposée sur la première couche.

2. Article d'optique selon la revendication 1, **caractérisé en ce que** la première couche du revêtement temporaire est une couche de polyuréthane.

3. Article d'optique selon la revendication 2, **caractérisé en ce que** la couche de polyuréthane est une couche d'une composition de latex de polyuréthane séchée.

4. Article d'optique la revendication 3, **caractérisé en ce que** la composition de latex de polyuréthane comprend au moins un latex poly(méth)acrylique, de préférence polyacrylique.

5. Article d'optique selon la revendication 4, **caractérisé en ce que** le latex poly(méth)acrylique représente 0.1 à 10% en poids, de préférence 2 à 6% en poids de la composition.

6. Article d'optique selon l'une quelconque des revendications 1 à 5, **caractérisé en ce que** le polymère de la seconde couche est choisi parmi les polymères vinyliques, les polyépoxydes, les polyépisulfures, les polyesters, les polyéthers, les polyester-éthers, les poly(méth)acrylates, les polythio(méth)acrylates, les polymères de styrène, les polymères de cellulose et leurs mélanges.

7. Article d'optique selon la revendication 6, **caractérisé en ce que** le polymère de la seconde couche est choisi parmi les polyacrylates, les polyalkylcelluloses et les polyhydroxyalkylcelluloses.

8. Article d'optique selon l'une quelconque des revendications 1 à 7, **caractérisé en ce que** le revêtement temporaire constitue un film pelable.

9. Article d'optique selon l'une quelconque des revendications 1 à 8, **caractérisé en ce que** le revêtement externe hydrophobe et/ou oléophobe est déposé sur un revêtement anti-reflet mono ou multicouche.

10. Article d'optique selon l'une quelconque des revendications 1 à 9, **caractérisé en ce qu'**il constitue une lentille ophtalmique.

## Claims

1. An optical article having on at least one of its main surfaces an outer hydrophobic and/or oleophobic coating and in direct contact with the outer hydrophobic and/or oleophobic coating a dual-layer temporary coating, **characterized in that** the dual-layer temporary coating comprises a first layer, in direct contact with the outer hydrophobic and/or oleophobic coating of a compound selected from halogenated olefin polymers and polyurethanes, and a second layer of a polymer or polymer mixture acting as a water barrier deposited on the first layer.

2. An optical article according to claim 1, **characterized in that** the first layer of the temporary coating is a polyurethane layer.

3. An optical article according to claim 2, **characterized in that** the polyurethane layer is a layer of a dried polyurethane type latex composition.

4. An optical article according to claim 3, **characterized in that** the polyurethane type latex composition comprises at least one poly(meth)acrylic latex, preferably a polyacrylic latex.

5. An optical article according to claim 4, **characterized in that** the poly(meth)acrylic latex represents from 0.1 to 10% by weight, preferably from 2 to 6% by weight of the composition.

6. An optical article according to any of claims 1 to 5, **characterized in that** the polymer of the second layer is selected from vinyl polymers, polyepoxides, polyepisulfides, polyesters, polyethers, polyester-ethers, poly(meth)acrylates, polythio(meth)acrylates, styrene polymers, cellulosic polymers, and their mixtures.

7. An optical article according to claim 6, **characterized in that** the polymer of the second layer is selected from polyacrylates, polyalkylcelluloses and polyhydroxyalkylcelluloses.

8. An optical article according to any one of claims 1 to 7, **characterized in that** the temporary coating is a strippable film.

9. An optical article according to any one of claims 1 to 8, **characterized in that** the outer hydrophobic and/or oleophobic coating is deposited onto a mono- or multilayered antireflection coating.

10. An optical article according to any one of claims 1 to 9, which is an ophthalmic lens.

## Patentansprüche

1. Optischer Artikel mit auf mindestens einer seiner Hauptoberflächen einer externen hydrophoben und/oder oleophoben Beschichtung und im direkten Kontakt mit der externen hydrophoben und/oder oleophoben Beschichtung einer temporären zweischichtigen Beschichtung, **dadurch gekennzeichnet, dass** die temporäre zweischichtige Beschichtung eine erste Schicht im direkten Kontakt mit der externen hydrophoben und/oder oleophoben Beschichtung umfassend ein Mittel ausgewählt unter den Polymeren an halogenierten Alkenen und den Polyurethanen und eine auf die erste Schicht aufgebrachte zweite Schicht eines Polymers oder einer Mischung an Polymeren, die eine Barriere für Wasser bildet, umfasst.

2. Optischer Artikel nach Anspruch 1, **dadurch gekennzeichnet, dass** die erste Schicht der temporären Beschichtung eine Schicht aus Polyurethan ist.

3. Optischer Artikel nach Anspruch 2, **dadurch gekennzeichnet, dass** die Schicht aus Polyurethan eine Schicht einer Zusammensetzung aus Latex aus getrocknetem Polyurethan ist.

4. Optischer Artikel nach Anspruch 3, **dadurch gekennzeichnet, dass** die Zusammensetzung aus Latex aus Polyurethan mindestens ein poly(meth)acrylhaltiges Latex, vorzugsweise polyacrylhaltig, umfasst.

5. Optischer Artikel nach Anspruch 4, **dadurch gekennzeichnet, dass** das poly(meth)acrylhaltige Latex 0,1 bis 10 Gew.-%, vorzugsweise 2 bis 6 Gew.-%, der Zusammensetzung ausmacht.

6. Optischer Artikel nach einem der Ansprüche 1 bis 5, **dadurch gekennzeichnet, dass** das Polymer der zweiten Schicht ausgewählt ist unter den Vinylpolymeren, den Polyepoxiden, den Polyepisulfiden, den Polyestern, den Polyethern, den Polyester-Ethern, den Poly(meth)acrylaten, den Polythio(meth)acrylaten, den Polymeren aus Styren, den Polymeren aus Cellulose und deren Mischungen.

7. Optischer Artikel nach Anspruch 6, **dadurch gekennzeichnet, dass** das Polymer der zweiten Schicht ausgewählt ist unter den Polyacrylaten, den Polyalkylcellulosen und den Polyhydroxyalkylcellulosen.

8. Optischer Artikel nach einem der Ansprüche 1 bis 7, **dadurch gekennzeichnet, dass** die temporäre Beschichtung aus einer abziehbaren Folie besteht.

9. Optischer Artikel nach einem der Ansprüche 1 bis 8, **dadurch gekennzeichnet, dass** die externe hydrophobe und/oder oleophobe Beschichtung auf einer anti-Reflex- ein- oder mehrschichtigen Beschichtung aufgebracht ist.

10. Optischer Artikel nach einem der Ansprüche 1 bis 9, **dadurch gekennzeichnet, dass** er eine ophthalmische Linse bildet.
